# EUROPEAN PATENT SPECIFICATION

(11) **EP 2 353 267 B1**
(45) Date of publication and mention of the grant of the patent: **18.07.2018**
(21) Application number: 08875198.7
(22) Date of filing: 17.10.2008
(51) Int. Cl.: H04L 29/06, H04L 12/58

(54) **METHOD, APPARATUS AND COMPUTER PROGRAM PRODUCT FOR COPYING CONTENT BETWEEN SERVERS**
VERFAHREN, VORRICHTUNG UND COMPUTERPROGRAMMPRODUKT ZUM KOPIEREN VON INHALT ZWISCHEN SERVERN
PROCÉDÉ, APPAREIL ET PRODUIT-PROGRAMME INFORMATIQUE PERMETTANT DE COPIER UN CONTENU ENTRE DES SERVEURS

(43) Date of publication of application: 10.08.2011
(73) Proprietor: Nokia Solutions and Networks Oy, 02610 Espoo (FI)
(72) Inventor: HARUNA, Adamu, FIN-33540 Tampere (FI); ROHNERT, Hans, 81543 München (DE); SEDLACEK, Ivo, 66434 Kurim (CZ); ÖRDÖGH, Zoltan, L4Z3S2 Mississauga, Ontario (CA)
(74) Representative: Borgström, Markus
(86) International application number: PCT/EP2008/064006
(87) International publication number: WO 2010/043266

(56) References cited:
- WO-A-01/75651
- US-A- 5 903 723
- US-A1- 2008 172 483
- FREED INNOSOFT INTERNATIONAL K MOORE UNIVERSITY OF TENNESSEE A CARGILLE N ET AL: "Definition of the URL MIME External-Body Access-Type; rfc2017.txt" IETF STANDARD, INTERNET ENGINEERING TASK FORCE, IETF, CH, 1 October 1996 (1996-10-01), XP015007801 ISSN: 0000-0003 cited in the application

## Description

### TECHNOLOGICAL FIELD

The invention relates to copying or moving content between servers, in particular, but not exclusively, to copying content between servers storing different types of communication data, including multimedia files.

### BACKGROUND

Modern mobile communication devices are used for a wide range of purposes in addition to traditional telephony. For example, it is known to use instant messaging or email to send messages that include multimedia objects such as images, audio files and video clips. Such messages often include large amounts of data that a user may wish a network to store independently of the messages they were originally attached to.

The Open Mobile Alliance (OMA) is developing a Converged IP Messaging (CPM) specification that provides for the convergence of multi-media communication services. The Open Mobile Alliance publishes much of its work on its website (www.openmobilealliance.org).

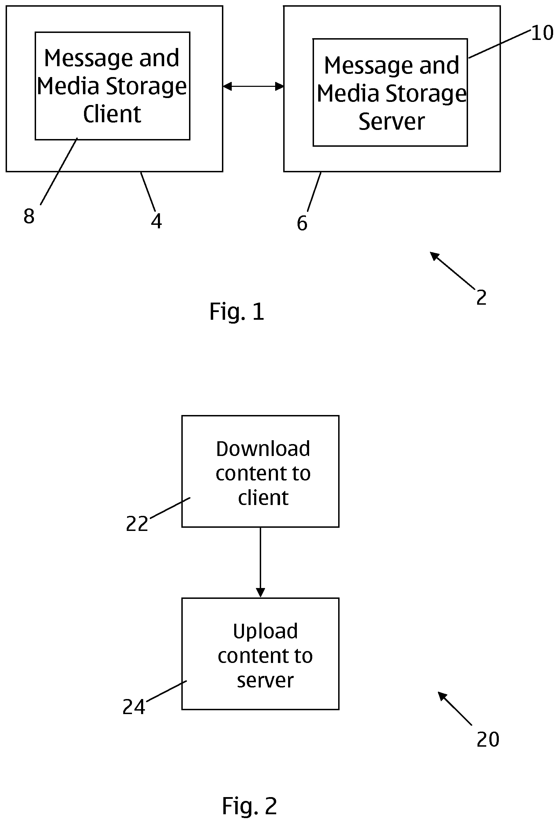

Figure 1 shows a system, indicated generally by the reference numeral 2, comprising a client device 4 and a central system 6. The client device 4 includes a message and media storage client 8. The central system 6 includes a message and media storage server 10. The client device 4 may be a CPM-enabled device and the central system 6 may be a CPM system.

The message and media storage server 10 provides management and storage functions for messages and other media and is used, for example, to store users' multimedia data. The message and media storage client 8 manages a particular user's resources at the server 10 and also manages the resources stored locally at the client device 4.

The message and media storage server 10 may be one component or consist of two components, one storing messages and another one storing media. The same can hold for the client side, i.e., it can host a message storage client and a media storage client.

Data stored in the message and media storage server 10 can be classified in two different ways:
1. Message-like contents (such as CPM messages, CPM conversations, and CPM session histories, including their attachments); and
2. Unstructured contents, e.g. plain binary files (of any type).

In some circumstances, a user may wish to transfer an attachment of a message from an area storing message-like contents (including the said attachment) to an area containing plain binary files. This may, for example, be done when a user is no longer interested in the whole message, but would like to keep the attachment. For example, if a user receives a message including an image as an attachment, the user may wish to copy the image to a separate location and then delete the original message.

Figure 2 is a flow chart 20 showing, in broad terms, how such an attachment may be transferred. The flow chart 20 includes a first step 22 in which the attachment is downloaded from the message and media storage server 10 to the client 4. Next, at step 24, the attachment is uploaded from the client 4 to the area of the server 10 that stores plain binary files.

The transfer of data via the client device 4 involves two over-the-air data transmissions. In the event that the end file is not stored at the client device 4, these over-the-air transmissions represent an unnecessary use of network resources.

US 5903723 discloses a method for transmitting email attachments from a sender of a network to a recipient. An attachment, having a unique network address, is stored in a storage device visible to the network and relatively local to the sender. An attachment reference is generated, comprising the network address of the attachment. The attachment reference is transmitted from the sender to the recipient. In this way, if the recipient wants to see the attachment, the recipient uses the reference and the attachment is delivered by the storage device to a suitable terminal device of the recipient.

US 2008/172483 discloses a method of saving email attachments in a folder structure on a file server. Some emails present on an email server have attachments associated with them. A user can instruct the email server to save an attachment on the file server and as a result the attachment is sent by the email server to the file server where it is stored.

WO 01/75651 discloses a system for storing an email attachment with a reference to a location where the attachment is stored. Upon receiving the email, the system examines determines if the email includes an attachment. If it does, the system stores the attachment at a location on a communication network from which the attachment can be retrieved. The system also modifies the email by replacing the attachment with a reference specifying the location of the attachment, and sends the modified email to a recipient.

The present invention seeks to address at least some of the problems outlined above.

### BRIEF SUMMARY

The invention is defined by a method according to claim 1, an apparatus according to claim 13, a system according to claim 22 and a computer program according to claim 23. Thus, the present invention enables a user to request that content at a second server (such as a message storage server of a CPM system) be provided to a first server (such as a content sharing server of a CPM system), without that content being passed via the user device. In many forms of the invention, the original content at the second server is retained.

The first server may store the content received from the second server. Thus, content can be copied from the second server to the first server in response to the request to copy content, without the user needing to receive the content. The content may be deleted from the second server, if desired.

The request to copy content may be an HTTP PUT request. In one particular form of the invention, the request to copy content is an HTTP PUT request with content reference. Other formats for the request to copy content are possible, including non HTTP formats. IMAP is one such alternative.

The indication of the location of the content on the second server included in said request to copy content may be provided as an IMAP uniform resource indicator.

The content access request issued by the first server to the second server may take the form of an IMAP request; for example, the content access request may include an IMAP uniform resource indicator indicating the location of the content on the second server. Alternatively, the content access request may take the form of an HTTP request, such as an HTTP GET request. Again, other formats are possible, such as requests in accordance with FTP and gopher protocols.

In some embodiments of the invention, the requested content is forwarded directly from the second server to the first server. In other forms of the invention, the requested content is forwarded from the second server to the first server via an intermediary, such as an adapter. The adapter may take the form of a separate server. Alternatively, the adapter may be provided as part of the first server. By way of example, the requested content may be forwarded from the second server to a dedicated resource of the first server and may then be further transferred within the first server. The content access request sent by the first server to the second server may be sent via the said adapter.

The location of the content on the second server may be identified by a base uniform resource locator in combination with a second uniform resource locator.

In some forms of the invention, the request from the user received at the first server includes the base uniform resource locator and the second uniform resource locator. In some other forms of the invention, the request from the user received at the first server includes the second uniform resource locator and the first server provides the base uniform resource locator.

The request to copy content received at the first server may include a base uniform resource locator and a second uniform resource locator. The base uniform resource locator may refer to a resource on the first server; in such an arrangement, the content access request may include an HTTP GET request issued to the resource and the resource may issue an IMAP request to the second server. Alternatively, the base uniform resource locator may refer to a resource on the second server; in such an arrangement, the content access request may include an HTTP GET request issued by the first server to the resource on the second server. In a further alternative, the base uniform resource locator may refer to a resource on a third server; in such an arrangement, the content access request may include an HTTP GET request to the resource on the third server and the resource may issue an IMAP request to the second server.

In some embodiments of the invention, the first server is an HTTP server. Other server types are possible. The first server may be a WebDAV server. Further, other non-HTTP servers (such as an IMAP server) are possible.

In some embodiments of the invention, the second server is an IMAP server. Again, other server types are possible. For example, the second server may be an HTTP server. In some embodiments of the invention, both the first and second servers are HTTP servers.

The first and second servers may form part of a Converged IP Messaging (CPM) system.

### BRIEF DESCRIPTION OF THE DRAWINGS

Embodiments of the invention are described below, by way of example only, with reference to the following numbered Figures.
Figure 1 is a block diagram of part of a known communication system;
Figure 2 is a flow chart demonstrating an aspect of the use of the system of Figure 1;
Figure 3 is a block diagram of part of a system in accordance with an aspect of the present invention;
Figure 4 is a message sequence demonstrating an aspect of the use of the system of Figure 3;
Figure 5 is a message sequence demonstrating an aspect of the use of the system of Figure 3 in accordance with an aspect of the present invention;
Figure 6 is a message sequence demonstrating an aspect of the use of the system of Figure 3 in accordance with an aspect of the present invention;
Figure 7 is a message sequence demonstrating an aspect of the use of the system of Figure 3 in accordance with an aspect of the present invention; and
Figure 8 is a message sequence demonstrating an aspect of the use of the system of Figure 3 in accordance with an aspect of the present invention.

### DETAILED DESCRIPTION

As discussed above, data stored in the message and media storage server 10 can be classified as either message-like contents or unstructured content (e.g. plain binary files). The two types of data may be accessed in a different manner. For example, Internet Message Access Protocol (IMAP) is one possible protocol for managing message-like contents. HTTP and Web-based Distributed Authoring and Versioning (WebDAV), which is an extension of HTTP, are two possible protocols for managing the plain binary files.

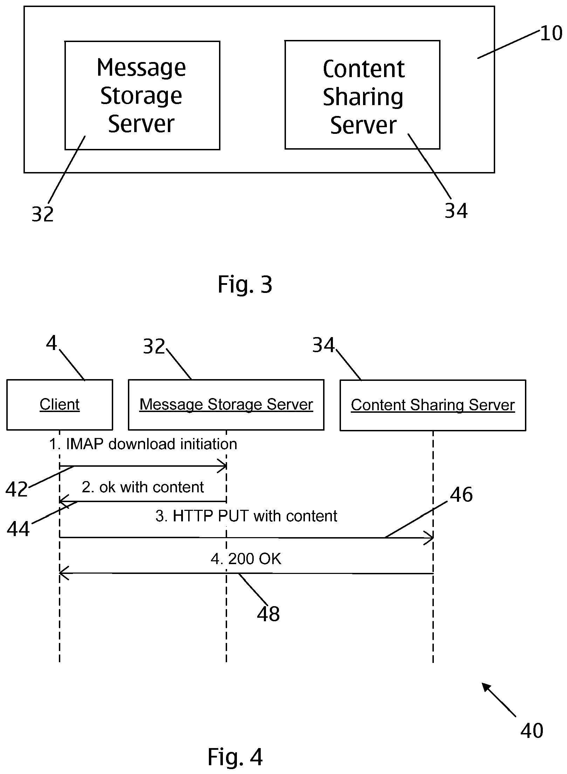

Since the types of the stored objects are different and the management protocols are different, it is a logical consequence to split the message and media storage server 10 into two parts. Such an arrangement is shown in Figure 3.

Figure 3 shows the message and media storage server 10 referred to above. The message and media storage server 10 includes a message storage server 32 and a content sharing server 34. The message storage server 32 contains the message-like contents discussed above (including any attachments to the messages): the content sharing server 34 contains the plain binary files discussed above. In some embodiments of the invention, data stored at the message storage server 32 is accessed using the IMAP protocol and that server may be referred to as an IMAP server. Similarly, in some embodiments of the invention, data stored at the content sharing server 34 is accessed using the HTTP protocol and that server may be referred to as an HTTP server.

Figure 4 shows a message sequence, indicated generally by the reference numeral 40, showing how the algorithm 20 described above with reference to Figure 2 can be used to transfer data between the message storage server 32 and the content sharing server 34. The message sequence 40 shows the data being transferred from the client 4 to the content sharing server 34 using an HTTP PUT request, with the content being included in the request body.

The message sequence 40 begins with the client 4 issuing an IMAP download request 42 to the message storage server 32. In response, the message storage server 32 provides the requested content in message 44. The client 4 then sends the content to the content sharing server 34 as an HTTP PUT request 46. In response, the content sharing server issues an OK message 48 to the client 4. The IMAP download request 42 and the HTTP PUT request 46 may be issued by the message and media storage client 8 of the client 4.

The HTTP PUT request 46 may take the following form:

```
 PUT /home/ivo/MyHelloWorld.txt HTTP/1.1
 Host: myMediaStorage.operator.net
 Content-Type: text/plain
 Hello World!
```

Executing the HTTP PUT request 46 results in a file being created or replaced at the location given by the URL:
http://myMediaStorage.operator.net/home/ivo/MyHelloWorld.txt

The content of the file created (or replaced) at that location is the text "Hello World!". In this example, the content of the file obtained from the message storage server (the text "Hello World!") in the message 44 is included in the HTTP PUT request 46. It should be noted that the actual text is included in the body of the PUT request, in accordance with the normal use of the HTTP PUT request.

The message sequence 40 involves a first data transfer from the message storage server 32 to the client 4 and a second data transfer from the client 4 to the content sharing server 34. This wastes network resources and incurs unnecessary costs.

As discussed above, in an exemplary embodiment of the invention, the message storage server 32 is an IMAP server and the content sharing server 34 is an HTTP server. Thus, in the message sequence 40, content is obtained from the message storage server 32 using an IMAP request, and content is sent to the content sharing server 34 using an HTTP request.

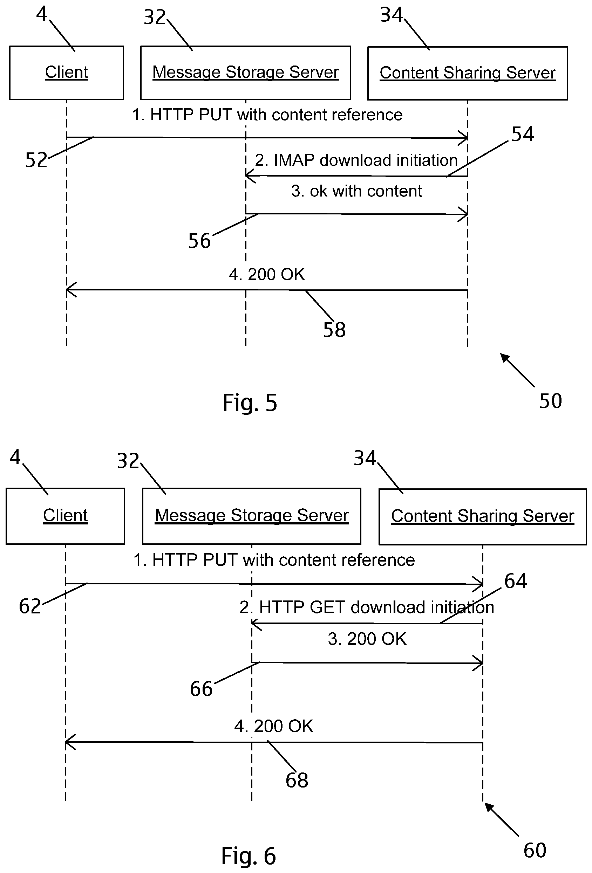

Figures 5 to 8 show message sequences 50, 60, 70 and 80 respectively, in accordance with aspects of the present invention. Each of the message sequences 50, 60, 70 and 80 omits the IMAP download request 42 of the message sequence 40. Instead, in each case, an HTTP PUT request with content reference is sent from the client 4 to the content sharing server 34.

An HTTP PUT request with content reference differs from an ordinary HTTP PUT request in that, instead of the body of the request containing the actual content being transferred, the body of the request only contains a reference containing the location at which the content is stored. Further details regarding such requests can be found at http://www.ietf.org/rfc/rfc2017.txt. The HTTP PUT request with content reference is sometimes referred to in this specification as a request to copy content, since it requests that content at one server be copied to another server.

Each of the message sequences 50, 60, 70 and 80 makes use of the HTTP PUT request with content reference in a different way, as discussed in detail below.

As shown in Figure 5, the message sequence 50 begins with the client 4 issuing an HTTP PUT request with content reference 52 to the content sharing server 34.

In response to the request 52, the content sharing server 34 sends an IMAP download request 54 to the message storage server 32. The IMAP download request 54 is similar to the request 42 of the message sequence 40, except that the request 54 is sent from the content sharing server 34 (the eventual destination of the requested content) and not the client 4. In response to the request 54, the message storage server 32 provides the requested content in message 56. The message 56 is similar to the message 44, again, with the exception of the destination of the message.

In response to the message 56, the content sharing server issues an OK message 58 to the client 4.

Thus, as in the message sequence 40, the message storage server 32 receives an IMAP request and the content sharing server 34 receives an HTTP request.

The HTTP PUT request with content reference 52 may take the following form:

```
 PUT /home/ivo/MyHelloWorld.txt HTTP/1.1
 Host: myMediaStorage.operator.net
 Content-type: message/external-body; access-type=URL;
 URL="imap://MyMessageStorageServer.operator.net/ivo.sedlacek@
 operator.net/MyFolder/MyMail/MyAttachment"
```

Executing the request 52 results in a file being created or replaced at the location given by the URL:
http://myMediaStorage.operator.net/home/ivo/MyHelloWorld.txt using the attachment stored at:
imap://MyMessageStorageServer.operator.net/ivo.sedlacek@operator .net/MyFolder/MyMail/MyAttachment

Upon receipt of the request 52, the content sharing server 34 uses an integrated IMAP client to fetch the content identified by the IMAP uniform resource indicator (URI) (imap://MyMessageStorageServer.operator.net/ ivo.sedlacek@operator.net/MyFolder/MyMail/MyAttachment) from the message storage server 32 and store it in the specified location of the content sharing server (steps 54 and 56 as discussed above). In order to do so, the content sharing server 34 must include an integrated IMAP client. In other words, the content sharing server needs to know how to handle IMAP URIs.

Figure 6 shows a message sequence 60 in accordance with an aspect of the present invention. The message sequence 60 begins with the client 4 issuing an HTTP PUT request with content reference 62 to the content sharing server 34.

In response to the request 62, the content sharing server 34 sends an HTTP GET request 64 to the message storage server 32. The GET request 64 initiates a download of the relevant content from the message storage server 32 and is therefore similar to the IMAP download request 54 described above with reference to Figure 5. In response to the request 64, the message storage server 32 provides the requested content in message 66. The message 66 is similar to the message 56 described above.

In response to the message 66, the content sharing server issues an OK message 68 to the client 4.

The HTTP PUT request with content reference 62 may take the following form:

```
 PUT /home/ivo/MyHelloWorld.txt HTTP/1.1
 Host: myMediaStorage.operator.net
 Content-type: message/external-body;access-
 type=URL; URL="http://MyMessageStorageServer.operator.net:1234
 5/CPMRedirector?TakeFrom=imap%3A%2F%2FMyMessageStorageServer.
 operator.net%2Fivo.sedlacek@operator.net%2FMyFolder%2FMyMail%
 2FMyAttachment"
```

Executing the request 62 results in a file being created or replaced at the location given by the URL:
http://myMediaStorage.operator.net/home/ivo/MyHelloWorld.txt using the attachment stored at:
imap://MyMessageStorageServer.operator.net/ivo.sedlacek@operator .net/MyFolder/MyMail/MyAttachment

The HTTP GET request 64 differs from the IMAP request 54 described above in that it is an HTTP request and not an IMAP request. An IMAP request is not possible, since, in this example, it is assumed that the content sharing server 34 is not able to issue an IMAP request, for example because the content sharing server 34 does not contain an integrated IMAP client. The HTTP GET request 64 specifies the base URI of the message storage server 34 as follows:
http://MyMessageStorageServer.operator.net:12345/CPMRedirector? TakeFrom=

The location of the requested content is provided in the TakeFrom parameter of the HTTP GET request 64 thus:
imap://MyMessageStorageServer.operator.net/ivo.sedlacek@operator .net/MyFolder/MyMail/MyAttachment

Provided the message storage server 32 is able to understand HTTP requests, the message sequence 60 can be used, since the message storage server is able to use the TakeFrom parameter of the HTTP GET request 64 to access the content requested by the content sharing server.

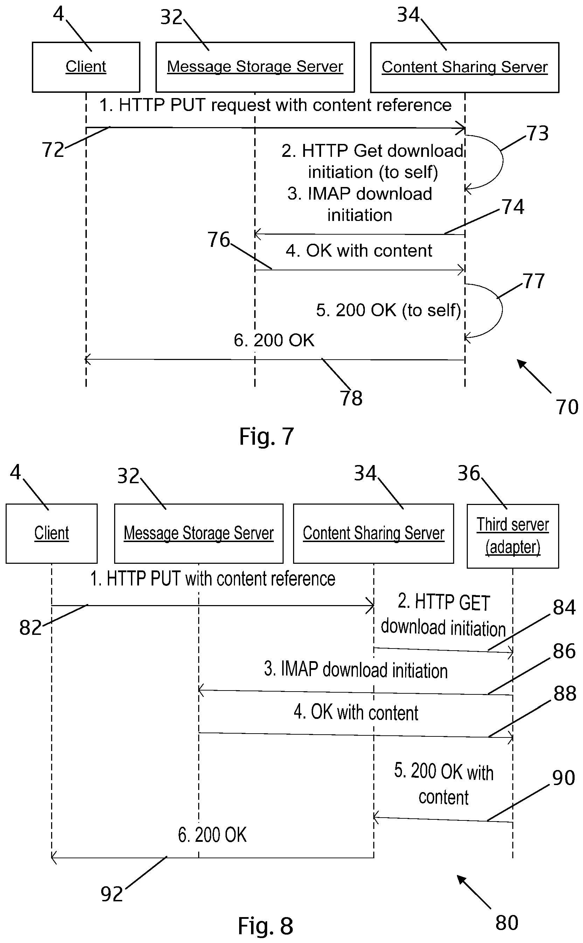

Figure 7 shows a message sequence 70 in accordance with an aspect of the present invention. The message sequence 70 begins with the client 4 issuing an HTTP PUT request with content reference 72 to the content sharing server 34. In response to the request 72, the content sharing server 34 sends an HTTP GET request 73 to a different location on the content sharing server 34.

This different location hosts a resource (such as a dedicated process) on the content sharing server 34 that is able to issue IMAP requests upon receiving HTTP requests and HTTP responses upon receiving IMAP responses.

The HTTP GET request 73 initiates a download of the relevant content from the message storage server 32 using an IMAP download request 74. The request 74 is largely the same as the IMAP download request 54 described above with reference to Figure 5. In response to the request 74, the message storage server 32 provides the requested content in message 76. The message 76 is similar to the messages 56 and 66 described above (although it should be noted that the messages 56 and 76 are in response to an IMAP request, whereas the message 66 is in response to an HTTP request, and is therefore implemented differently).

In response to the message 76, the content sharing server issues an OK message 77 to the originator of the request 73. The content sharing server 34 then sends an OK message 78 to the client 4.

The HTTP PUT request with content reference 72 may take the following form:

```
 PUT /home/ivo/MyHelloWorld.txt HTTP/1.1
 Host: myMediaStorage.operator.net
 Content-type: message/external-body;access-type=URL;
 URL="http://myMediaStorage.operator.net:9876/IMAPFetcher?Take
 From=imap%3A%2F%2FMyMessageStorageServer.operator.net%2Fivo.s
 edlacek@operator.net%2FMyFolder%2FMyMail%2FMyAttachment"
```

The message sequence 70 differs from the message sequence 60 in that, in response to the HTTP PUT request with content reference 72, an HTTP GET request is sent to a dedicated resource on the content sharing server, which itself sends an IMAP download request to the message storage server 32. Thus, the message storage server 32 receives an IMAP request, without the original requesting part of the content sharing server needing to be able to issue an IMAP request. Thus, the dedicated resource of the content sharing server acts as a kind of adapter that receives an HTTP request and issues an IMAP request (and also receives an IMAP response and forwards an HTTP response). Thus, the message sequence 70 can be used in scenarios where it is not possible to issue the original request as an IMAP request and the message storage server is not able to process an HTTP request.

The message sequence 70 differs from the message sequence 50 in the use of the dedicated resource on the content sharing server.

Figure 8 shows a message sequence 80 in accordance with an aspect of the present invention. The message sequence 80 begins with the client 4 issuing an HTTP PUT request with content reference 82 to the content sharing server 34.

In response to the request 82, the content sharing server 34 sends an HTTP GET request 84 to a third server 36. The third server 36 may be referred to as an adapter. The third server/adapter 36 initiates a download of the relevant content from the message storage server 32 using an IMAP download request 86. The request 86 is largely the same as the IMAP download requests 54 and 74 described above with reference to Figures 5 and 7 respectively. In response to the request 86, the message storage server 32 provides the requested content in message 88. The message 88 is similar to the messages 56, 66 and 76 described above (although the messages 56, 76 and 88 are in response to an IMAP request, whereas the message 66 is in response to an HTTP request, and is therefore implemented differently).

In response to the message 88, the third server issues an OK message 90, together with the requested content to the content sharing server 34. Finally, the content sharing server 34 sends an OK message (message 92) to the client 4.

The message sequence 80 differs from the message sequence 70 in that, whereas the HTTP GET request 73 is sent from the content sharing server 34 to another location on the same server (which location is able to issue IMAP requests), the HTTP GET request 84 is sent from the content sharing server 34 to the third server 36. Thus, the third server 36 performs the function of the dedicated resource described above.

The HTTP PUT request with content reference 82 may take the following form:

```
 PUT /home/ivo/MyHelloWorld.txt HTTP/1.1
 Host: myMediaStorage.operator.net
 Content-type: message/external-body;access-
 type=URL;URL="http://MyImapResolver.operator.net:12345/Resolv
 eImapToHttp?TakeFrom=imap%3A%2F%2FMyMessageStorageServer.oper
 ator.net%2Fivo.sedlacek@operator.net%2FMyFolder%2FMyMail%2FMy
 Attachment"
```

In the message sequence 80, the HTTP PUT request with content reference message 82 includes a base URI (providing the location of the third server) as follows:
http://MylmapResolver.operator.net:12345/ResolvelmapToHttp?TakeFrom=

The provision of a base URI in the client enables the HTTP GET message 84 to be sent to the third server 36. This arrangement is not essential.

The HTTP PUT request with content reference message 82 may be sent without including the base URI of the third server 36. In such an arrangement, the content sharing server 34 may be pre-configured with the base URI of the third server 36. (This contrasts with the embodiments described above, in which the client 4 may be pre-configured with the relevant base URI.)

Such an HTTP PUT request with content reference 82 may take the following form:

```
 PUT /home/ivo/MyHelloWorld.txt HTTP/1.1
 Host: myMediaStorage.operator.net
 Content-type: message/external-body; access-type=URL;
 URL="imap://MyMessageStorageServer.operator.net/ivo.sedlacek@
 operator.net/MyFolder/MyMail/MyAttachment"
```

As discussed above, the content sharing server 34 is pre-configured to send the HTTP GET request 84 to the third server 36, the URI of which is stored at the content sharing server 34. The remainder of the message sequence 80 can proceed exactly as described above.

The HTTP PUT requests with content references 62 and 72 of the message sequences 60 and 70 respectively can be modified in similar ways.

For example, the HTTP PUT request with content reference 62 may omit the base URI of the message storage server 32, with the content sharing server 34 being pre-configured to send the HTTP GET request 64 to the relevant resource on the message storage server 32. Similarly, the HTTP PUT request with content reference 72 may omit the base URI of the resource on the content sharing server, with the content sharing server 34 being pre-configured to send the HTTP GET request 73 to the relevant resource on the content sharing server 34.

In the various embodiments of the invention described above, the HTTP PUT requests with content reference 52, 62, 72 and 82 are described as being issued by the client 4. Of course, in practice, those HTTP PUT requests may be issued by the message and media storage client 8 of the client 4.

Many of the embodiments described above make use of the IMAP protocol to obtain data from the message storage server. This is not essential. For example, other protocols, such as FTP and gopher, could be used to obtain data instead of IMAP.

In the embodiments of the invention described above, the message storage server is described as being an IMAP server. This is not essential. For example, the principles of the invention can be used to copy files between two HTTP servers.

The content sharing server 34 is generally referred to above as an HTTP server. This is not essential. For example, the content sharing server 34 may also be a WebDAV server.

The embodiments of the invention described above are illustrative rather than restrictive. It will be apparent to those skilled in the art that the above devices and methods may incorporate a number of modifications without departing from the general scope of the invention. It is intended to include all such modifications within the scope of the invention insofar as they fall within the scope of the appended claims.

## Claims

1. A method comprising:
receiving from a user device a request to copy content (52; 62; 72, 82) at a first server (34) that is a content sharing server,
**characterised in that** the request to copy content requests that content from a second server (32) be provided to said first server, the request to copy content being a hypertext-transfer-protocol PUT request that includes an indication of a location of the content on the second server, the second server being a message storage server,
and **characterised in that** the method comprises issuing a content access request (54; 64; 73, 74; 84, 86) from the first server to the second server, and receiving said content (56; 66; 76; 86) from the second server at said first server in response to the content access request.

2. A method as claimed in claim 1, wherein the indication of the location of the content on the second server (32) included in said request to copy content (52; 62; 72; 82) is provided as an IMAP uniform resource indicator.

3. A method as claimed in claim 1 or claim 2, wherein the content access request (54; 64; 73, 74; 84, 86) includes an IMAP uniform resource indicator indicating the location of the content on the second server (32).

4. A method as claimed in claim 1, wherein the location of the content on the second server (32) is indicated by a base uniform resource locator in combination with a second uniform resource locator.

5. A method as claimed in claim 3, wherein the user device is pre-configured to provide the base URI.

6. A method as claimed in claim 5, wherein the request to copy content (52; 62; 72; 82) includes the second uniform resource locator and the first server (34) provides the base uniform resource locator.

7. A method as claimed in any one of claims 4 to 6, wherein the base uniform resource locator refers to a resource on the second server (32), wherein:
said content access request (54; 64; 73, 74; 84, 86) includes a first request to the resource on the second server; and
the content located at the second uniform locator is returned to the first server (34) under the control of the resource on the second server.

8. A method as claimed in claim 7, wherein the content access request (54; 64; 73, 74; 84, 86) includes an HTTP GET request (64; 84) issued by the first server (34) to the resource on the second server (32).

9. A method as claimed in any one of claims 4 to 6, wherein the base uniform resource locator refers to a resource on the first server (34), wherein:
said content access request includes a first request (73) issued by the first server to the resource on the first server; and
said content access request includes a second request (74) issued by the resource on the first server to the second server in response to the first request of said content access request.

10. A method as claimed in any one of claims 4 to 6, wherein the base uniform resource locator refers to a resource on a third server (36), wherein:
said content access request includes a first request (84) issued by the first server (34) to the resource on the third server; and
said content access request includes a second request (86) issued by the resource on the third server to the second server (32), in response to the first request.

11. A method as claimed in claim 9 or claim 10, wherein the first request of the content access request comprises an HTTP GET request (84) issued by the first server (34) to the resource.

12. A method as claimed in any one of claims 9 to 11, wherein the second request of the content access request includes an IMAP uniform resource indicator (86) referring to the location of the content on the second server (32).

13. A first server (34) that is a content sharing server configured to receive from a user device a request to copy content (52; 62; 72; 82), **characterised in that** the request to copy content requests that content at a second server (32) be provided to the first server, the request to copy content being a hypertext-transfer-protocol PUT request that includes an indication of a location of the content on the second server, the second server being a message storage server,
and **characterised in that** the first server is configured to issue a content access request (54; 64; 73, 74; 84, 86) to the second server, and is configured to receive said content from the second server in response to the content access request.

14. A first server (34) as claimed in claim 13, wherein the indication of the location of the content on the second server (32) included in the request to copy content (52; 62; 72; 82) is provided as an IMAP uniform resource indicator.

15. A first server (34) as claimed in claim 13 or claim 14, wherein the content access request (54; 64; 73, 74; 84, 86) includes an IMAP uniform resource indicator indicating the location of the content on the second server (32).

16. A first server (34) as claimed in claim 13, wherein the location of the content on the second server (32) is indicated by a base uniform resource locator in combination with a second uniform resource locator.

17. A first server (34) as claimed in claim 16, wherein:
the base uniform resource locator refers to a resource on the second server (32);
the first server is configured to send said content access request (54; 64; 73, 74; 84, 86) to the resource on the second server; and
the content located at the second uniform locator is returned to the first server under the control of the resource on the second server.

18. A first server (34) as claimed in claim 16, further comprising a resource, wherein:
the base uniform resource locator refers to the resource on the first server;
said content access request includes a first request (73) issued by the first server to the resource on the first server; and
the resource is configured to issue a second request (74) of said content access request to the second server (32) in response to the first request.

19. A first server (34) as claimed in claim 16, wherein the base uniform resource locator refers to a resource on a third server (36), wherein:
said content access request includes a first request (84) issued by the first server to the resource on the third server; and
said content access request includes a second request (86) issued by the resource on the third server to the second server (32), in response to the first request.

20. A first server (34) as claimed in claim 18 or claim 19, wherein the second request (86) of the content access request includes an IMAP uniform resource indicator referring to the location of the content on the second server (32).

21. A first server (34) as claimed in any one of claims 13 to 20, wherein said first server is an HTTP server.

22. A system comprising a content sharing server (34) and a message storage server (32),
the content sharing server being configured to receive from a user device a request to copy content (52; 62; 72; 82), **characterised in that**:
the request to copy content requests that content at the message storage server be forwarded to the content storage server, the request to copy content being a hypertext-transfer-protocol PUT request that includes an indication of a location of the content on the message storage server;
the content sharing server is configured to issue a content access request (54; 64; 73, 74; 84, 86) to the message storage server; and
the message storage server is configured to forward the content to said content sharing server in response to the content access request.

23. A computer program for a content sharing server, the computer program comprising:
code for receiving from a user device a request to copy content (52; 62; 72; 82), **characterised in that** the request to copy content requests that content at a message storage server (34) be provided to the content sharing server, when executed by the content sharing server, the request to copy content being a hypertext-transfer-protocol PUT request that includes an indication of a location of the content on the server,
and **characterised in that** the computer program comprises code for issuing, when executed by the content sharing server, a content access request (54; 64; 73, 74; 84, 86) to said message storage server, and code for receiving, when executed by the content sharing server, said content from the message storage server in response to the content access request.

## Patentansprüche

1. Verfahren, umfassend:
Empfangen, von einer Benutzervorrichtung, einer Anfrage zum Kopieren von Inhalt (52; 62; 72, 82) an einem ersten Server (34), der ein Server zum gemeinsamen Nutzen von Inhalt ist, **dadurch gekennzeichnet, dass** die Anforderung zum Kopieren von Inhalt anfordert, dass ein Inhalt von einem zweiten Server (32) zum ersten Server bereitgestellt werden soll, wobei die Anforderung zum Kopieren von Inhalt eine Hypertext-Transferprotokoll-PUT-Anforderung ist, die eine Indikation eines Standorts des Inhalts auf dem zweiten Server beinhaltet, wobei der zweite Server ein Nachrichtenspeicherserver ist,
**dadurch gekennzeichnet, dass** das Verfahren Ausstellen einer Inhaltszugriffsanforderung (54; 64; 73, 74; 84, 86) vom ersten Server zum zweiten Server und Empfangen des Inhalts (56; 66; 76; 86) vom zweiten Server am ersten Server als Reaktion auf die Inhaltszugriffsanforderung umfasst.

2. Verfahren nach Anspruch 1, wobei die Indikation des Standorts des Inhalts auf dem zweiten Server (32), die in der Anforderung zum Kopieren von Inhalt (52; 62; 72; 82) enthalten ist, als ein IMAP-Uniform-Resource-Indicator bereitgestellt wird.

3. Verfahren nach Anspruch 1 oder Anspruch 2, wobei die Inhaltszugriffsanforderung (54; 64; 73, 74; 84, 86) einen IMAP-Uniform-Resource-Indicator beinhaltet, der den Standort des Inhalts auf dem zweiten Server (32) angibt.

4. Verfahren nach Anspruch 1, wobei der Standort des Inhalts auf dem zweiten Server (32) durch einen Basis-Uniform-Resource-Locator in Kombination mit einem zweiten Uniform-Resource-Locator angegeben wird.

5. Verfahren nach Anspruch 3, wobei die Benutzervorrichtung zum Bereitstellen des Basis-URI vorkonfiguriert ist.

6. Verfahren nach Anspruch 5, wobei die Anforderung zum Kopieren von Inhalt (52; 62; 72; 82) den zweiten Uniform-Resource-Locator beinhaltet und der erste Server (34) den Basis-Uniform-Resource-Locator bereitstellt.

7. Verfahren nach einem der Ansprüche 4 bis 6, wobei sich der Basis-Uniform-Resource-Locator auf eine Ressource auf dem zweiten Server (32) bezieht, wobei:
die Inhaltszugriffsanforderung (54; 64; 73, 74; 84, 86) eine erste Anforderung zur Ressource auf dem zweiten Server beinhaltet und
der Inhalt, der sich am zweiten Uniform-Locator befindet, unter der Steuerung der Ressource auf dem zweiten Server zum ersten Server (34) zurückgesendet wird.

8. Verfahren nach Anspruch 7, wobei die Inhaltszugriffsanforderung (54; 64; 73, 74; 84, 86) eine HTTP-GET-Anforderung (64, 84) beinhaltet, die durch den ersten Server (34) zur Ressource auf dem zweiten Server (32) ausgestellt wird.

9. Verfahren nach einem der Ansprüche 4 bis 6, wobei sich der Basis-Uniform-Resource-Locator auf eine Ressource auf dem ersten Server (34) bezieht, wobei:
die Inhaltszugriffsanforderung eine erste Anforderung (73) beinhaltet, die durch den ersten Server zur Ressource auf dem ersten Server ausgestellt wird; und
die Inhaltszugriffsanforderung eine zweite Anforderung (74) beinhaltet, die als Reaktion auf die erste Anforderung der Inhaltszugriffsanforderung durch die Ressource auf dem ersten Server zum zweiten Server ausgestellt wird.

10. Verfahren nach einem der Ansprüche 4 bis 6, wobei sich der Basis-Uniform-Resource-Locator auf eine Ressource auf einem dritten Server (36) bezieht, wobei:
die Inhaltszugriffsanforderung eine erste Anforderung (84) beinhaltet, die durch den ersten Server (34) zur Ressource auf dem dritten Server ausgestellt wird; und
die Inhaltszugriffsanforderung eine zweite Anforderung (86) beinhaltet, die als Reaktion auf die erste Anforderung durch die Ressource auf dem dritten Server zum zweiten Server (32) ausgestellt wird.

11. Verfahren nach Anspruch 9 oder Anspruch 10, wobei die erste Anforderung der Inhaltszugriffsanforderung eine HTTP-GET-Anforderung (84) beinhaltet, die durch den ersten Server (34) zur Ressource ausgestellt wird.

12. Verfahren nach einem der Ansprüche 9 bis 11, wobei die zweite Anforderung der Inhaltszugriffsanforderung einen IMAP-Uniform-Resource-Indicator (86) beinhaltet, der sich auf den Standort des Inhalts auf dem zweiten Server (32) bezieht.

13. Erster Server (34), der ein Server zum gemeinsamen Nutzen von Inhalt ist und ausgelegt ist zum:
Empfangen, von einer Benutzervorrichtung, einer Anforderung zum Kopieren von Inhalt (52; 62; 72; 82),
**dadurch gekennzeichnet, dass** die Anforderung zum Kopieren von Inhalt anfordert, dass ein Inhalt an einem zweiten Server (32) zum ersten Server bereitgestellt werden soll, wobei die Anforderung zum Kopieren von Inhalt eine Hypertext-Transferprotokoll-PUT-Anforderung ist, die eine Indikation eines Standorts des Inhalts auf dem zweiten Server beinhaltet, wobei der zweite Server ein Nachrichtenspeicherserver ist,
und **dadurch gekennzeichnet, dass** der erste Server ausgelegt ist zum Ausstellen einer Inhaltszugriffsanforderung (54; 64; 73, 74; 84, 86) zum zweiten Server und ausgelegt ist zum Empfangen des Inhalts vom zweiten Server als Reaktion auf die Inhaltszugriffsanforderung.

14. Erster Server (34) nach Anspruch 13, wobei die Indikation des Standorts des Inhalts auf dem zweiten Server (32), die in der Anforderung zum Kopieren von Inhalt (52; 62; 72; 82) enthalten ist, als ein IMAP-Uniform-Resource-Indicator bereitgestellt wird.

15. Erster Server (34) nach Anspruch 13 oder Anspruch 14, wobei die Inhaltszugriffsanforderung (54; 64; 73, 74; 84, 86) einen IMAP-Uniform-Resource-Indicator beinhaltet, der den Standort des Inhalts auf dem zweiten Server (32) angibt.

16. Erster Server (34) nach Anspruch 13, wobei der Standort des Inhalts auf dem zweiten Server (32) durch einen Basis-Uniform-Resource-Locator in Kombination mit einem zweiten Uniform-Resource-Locator angegeben wird.

17. Erster Server (34) nach Anspruch 16, wobei:
sich der Basis-Uniform-Resource-Locator auf eine Ressource auf dem zweiten Server (32) bezieht;
der erste Server ausgelegt ist zum Senden der Inhaltszugriffsanforderung (54; 64; 73, 74; 84, 86) zur Ressource auf dem zweiten Server und
der Inhalt, der sich am zweiten Uniform-Locator befindet, unter der Steuerung der Ressource auf dem zweiten Server zum ersten Server zurückgesendet wird.

18. Erster Server (34) nach Anspruch 16, ferner umfassend eine Ressource, wobei:
sich der Basis-Uniform-Resource-Locator auf die Ressource auf dem ersten Server bezieht;
die Inhaltszugriffsanforderung eine erste Anforderung (73) beinhaltet, die durch den ersten Server zur Ressource auf dem ersten Server ausgestellt wird; und
die Ressource ausgelegt ist zum Ausstellen einer zweiten Anforderung (74) der Inhaltszugriffsanforderung zum zweiten Server (32) als Reaktion auf die erste Anforderung.

19. Erster Server (34) nach Anspruch 16, wobei sich der Basis-Uniform-Resource-Locator auf eine Ressource auf einem dritten Server (36) bezieht, wobei:
die Inhaltszugriffsanforderung eine erste Anforderung (84) beinhaltet, die durch den ersten Server zur Ressource auf dem dritten Server ausgestellt wird; und
die Inhaltszugriffsanforderung eine zweite Anforderung (86) beinhaltet, die als Reaktion auf die erste Anforderung durch die Ressource auf dem dritten Server zum zweiten Server (32) ausgestellt wird.

20. Erster Server (34) nach Anspruch 18 oder Anspruch 19, wobei die zweite Anforderung (86) der Inhaltszugriffsanforderung einen IMAP-Uniform-Resource-Indicator beinhaltet, der sich auf den Standort des Inhalts auf dem zweiten Server (32) bezieht.

21. Erster Server (34) nach einem der Ansprüche 13 bis 20, wobei der erste Server ein HTTP-Server ist.

22. System, das einen Server (34) zum gemeinsamen Nutzen von Inhalt und einen Nachrichtenspeicherserver (32) umfasst,
wobei der Server zum gemeinsamen Nutzen von Inhalt ausgelegt ist zum Empfangen, von einer Benutzervorrichtung, einer Anforderung zum Kopieren von Inhalt (52; 62; 72; 82), **dadurch gekennzeichnet, dass**:
die Anforderung zum Kopieren von Inhalt anfordert, dass ein Inhalt am Nachrichtenspeicherserver zum Inhaltsspeicherserver weitergeleitet wird, wobei die Anforderung zum Kopieren von Inhalt eine Hypertext-Transferprotokoll-PUT-Anforderung ist,
die eine Indikation eines Standorts des Inhalts auf dem Nachrichtenspeicherserver beinhaltet;
der Server zum gemeinsamen Nutzen von Inhalt ausgelegt ist zum Ausstellen einer Inhaltszugriffsanforderung (54; 64; 73, 74; 84, 86) zum Nachrichtenspeicherserver und
der Nachrichtenspeicherserver ausgelegt ist zum Weiterleiten des Inhalts zum Server zum gemeinsamen Nutzen von Inhalt als Reaktion auf die Inhaltszugriffsanforderung.

23. Computerprogramm für einen Server zum gemeinsamen Nutzen von Inhalt, wobei das Computerprogramm Folgendes umfasst:
Code zum Empfangen, von einer Benutzervorrichtung, einer Anforderung zum Kopieren von Inhalt (52; 62; 72; 82), **dadurch gekennzeichnet, dass** die Anforderung zum Kopieren von Inhalt anfordert, dass ein Inhalt an einem Nachrichtenspeicherserver (34) zum Server zum gemeinsamen Nutzen von Inhalt bereitgestellt werden soll, wenn er durch den Server zum gemeinsamen Nutzen von Inhalt ausgeführt wird, wobei die Anforderung zum Kopieren von Inhalt eine Hypertext-Transferprotokoll-PUT-Anforderung ist, die eine Indikation eines Standorts des Inhalts auf dem Server beinhaltet,
und **dadurch gekennzeichnet, dass** das Computerprogramm Code zum Ausstellen, wenn er durch den Server zum gemeinsamen Nutzen von Inhalt ausgeführt wird, einer Inhaltszugriffsanforderung (54; 64; 73, 74; 84, 86) zum Nachrichtenspeicherserver und Code zum Empfangen, wenn er durch den Server zum gemeinsamen Nutzen von Inhalt ausgeführt wird, des Inhalts vom Nachrichtenspeicherserver als Reaktion auf die Inhaltszugriffsanforderung umfasst.

## Revendications

1. Un procédé comprenant :
la réception à partir d'un dispositif d'utilisateur d'une demande de copie d'un contenu (52; 62; 72; 82) au niveau d'un premier serveur (34) qui est un serveur de partage de contenus,
**caractérisé en ce que** la demande de copie d'un contenu demande qu'un contenu provenant d'un deuxième serveur (32) soit fourni audit premier serveur, la demande de copie d'un contenu étant une demande de protocole de transfert hypertexte PUT qui comprend une indication d'un emplacement du contenu sur le deuxième serveur, le deuxième serveur étant un serveur de conservation en mémoire de messages,
et **caractérisé en ce que** le procédé comprend l'émission d'une demande d'accès à un contenu (54; 64; 73, 74; 84, 86) du premier serveur vers le deuxième serveur, et la réception dudit contenu (56; 66; 76; 86) à partir du deuxième serveur au niveau dudit premier serveur en réponse à la demande d'accès à un contenu.

2. Un procédé selon la revendication 1, dans lequel l'indication de l'emplacement du contenu sur le deuxième serveur (32) incluse dans ladite demande de copie d'un contenu (52; 62; 72; 82) est fournie sous la forme d'un indicateur de ressource uniforme IMAP.

3. Un procédé selon la revendication 1 ou 2, dans lequel la demande d'accès à un contenu (54; 64; 73, 74; 84, 86) comprend un indicateur de ressource uniforme IMAP indiquant l'emplacement du contenu sur le deuxième serveur (32) .

4. Un procédé selon la revendication 1, dans lequel l'emplacement du contenu sur le deuxième serveur (32) est indiqué par un localisateur de ressources uniforme de base en combinaison avec un deuxième localisateur de ressources uniforme.

5. Un procédé selon la revendication 3, dans lequel le dispositif d'utilisateur est préconfiguré de façon à fournir l'URI de base.

6. Un procédé selon la revendication 5, dans lequel la demande de copie d'un contenu (52; 62; 72; 82) comprend le deuxième localisateur de ressources uniforme et le premier serveur (34) fournit le localisateur de ressources uniforme de base.

7. Un procédé selon l'une quelconque des revendications 4 à 6, dans lequel le localisateur de ressources uniforme de base fait référence à une ressource sur le deuxième serveur (32), dans lequel :
ladite demande d'accès à un contenu (54; 64; 73, 74; 84, 86) comprend une première demande relative à la ressource sur le deuxième serveur, et
le contenu situé au niveau du deuxième localisateur uniforme est renvoyé vers le premier serveur (34) sous le contrôle de la ressource sur le deuxième serveur.

8. Un procédé selon la revendication 7, dans lequel la demande d'accès à un contenu (54; 64; 73, 74; 84, 86) comprend une demande GET HTTP (64; 84) émise par le premier serveur (34) relative à la ressource sur le deuxième serveur (32).

9. Un procédé selon l'une quelconque des revendications 4 à 6, dans lequel le localisateur de ressources uniforme de base fait référence à une ressource sur le premier serveur (34), dans lequel :
ladite demande d'accès à un contenu comprend une première demande (73) émise par le premier serveur relative à la ressource sur le premier serveur, et
ladite demande d'accès à un contenu comprend une deuxième demande (74) émise par la ressource sur le premier serveur vers le deuxième serveur en réponse à la première demande de ladite demande d'accès à un contenu.

10. Un procédé selon l'une quelconque des revendications 4 à 6, dans lequel le localisateur de ressources uniforme de base fait référence à une ressource sur un troisième serveur (36), dans lequel :
ladite demande d'accès à un contenu comprend une première demande (84) émise par le premier serveur (34) relative à la ressource sur le troisième serveur, et
ladite demande d'accès à un contenu comprend une deuxième demande (86) émise par la ressource sur le troisième serveur vers le deuxième serveur (32), en réponse à la première demande.

11. Un procédé selon la revendication 9 ou 10, dans lequel la première demande de demande d'accès à un contenu comprend une demande GET HTTP (84) émise par le premier serveur (34) relative à la ressource.

12. Un procédé selon l'une quelconque des revendications 9 à 11, dans lequel la deuxième demande de demande d'accès à un contenu comprend un indicateur de ressource uniforme IMAP (86) faisant référence à l'emplacement du contenu sur le deuxième serveur (32).

13. Un premier serveur (34) qui est un serveur de partage de contenus configuré de façon à
recevoir à partir d'un dispositif d'utilisateur une demande de copie d'un contenu (52; 62; 72; 82),
**caractérisé en ce que** la demande de copie d'un contenu demande qu'un contenu au niveau d'un deuxième serveur (32) soit fourni au premier serveur, la demande de copie d'un contenu étant une demande de protocole de transfert hypertexte PUT qui comprend une indication d'un emplacement du contenu sur le deuxième serveur, le deuxième serveur étant un serveur de conservation en mémoire de messages,
et **caractérisé en ce que** le premier serveur est configuré de façon à émettre une demande d'accès à un contenu (54; 64; 73, 74; 84, 86) vers le deuxième serveur, et est configuré de façon à recevoir ledit contenu à partir du deuxième serveur en réponse à la demande d'accès à un contenu.

14. Un premier serveur (34) selon la revendication 13, dans lequel l'indication de l'emplacement du contenu sur le deuxième serveur (32) incluse dans la demande de copie d'un contenu (52; 62; 72; 82) est fournie sous la forme d'un indicateur de ressource uniforme IMAP.

15. Un premier serveur (34) selon la revendication 13 ou 14, dans lequel la demande d'accès à un contenu (54; 64; 73, 74; 84, 86) comprend un indicateur de ressource uniforme IMAP indiquant l'emplacement du contenu sur le deuxième serveur (32) .

16. Un premier serveur (34) selon la revendication 13, dans lequel l'emplacement du contenu sur le deuxième serveur (32) est indiqué par un localisateur de ressources uniforme de base en combinaison avec un deuxième localisateur de ressources uniforme.

17. Un premier serveur (34) selon la revendication 16, dans lequel :
le localisateur de ressources uniforme de base fait référence à une ressource sur le deuxième serveur (32),
le premier serveur est configuré de façon à envoyer ladite demande d'accès à un contenu (54; 64; 73, 74; 84, 86) relative à la ressource sur le deuxième serveur, et
le contenu situé au niveau du deuxième localisateur uniforme est renvoyé vers le premier serveur sous le contrôle de la ressource sur le deuxième serveur.

18. Un premier serveur (34) selon la revendication 16, comprenant en outre une ressource, dans lequel :
le localisateur de ressources uniforme de base fait référence à la ressource sur le premier serveur,
ladite demande d'accès à un contenu comprend une première demande (73) émise par le premier serveur relative à la ressource sur le premier serveur, et
la ressource est configurée de façon à émettre une deuxième demande (74) de ladite demande d'accès à un contenu vers le deuxième serveur (32) en réponse à la première demande.

19. Un premier serveur (34) selon la revendication 16, dans lequel le localisateur de ressources uniforme de base fait référence à une ressource sur un troisième serveur (36), dans lequel :
ladite demande d'accès à un contenu comprend une première demande (84) émise par le premier serveur relative à la ressource sur le troisième serveur, et
ladite demande d'accès à un contenu comprend une deuxième demande (86) émise par la ressource sur le troisième serveur vers le deuxième serveur (32), en réponse à la première demande.

20. Un premier serveur (34) selon la revendication 18 ou 19, dans lequel la deuxième demande (86) de demande d'accès à un contenu comprend un indicateur de ressource uniforme IMAP faisant référence à l'emplacement du contenu sur le deuxième serveur (32).

21. Un premier serveur (34) selon l'une quelconque des revendications 13 à 20, dans lequel ledit premier serveur est un serveur HTTP.

22. Un système comprenant un serveur de partage de contenus (34) et un serveur de conservation en mémoire de messages (32),
le serveur de partage de contenus étant configuré de façon à recevoir à partir d'un dispositif d'utilisateur une demande de copie d'un contenu (52; 62; 72; 82), **caractérisé en ce que** :
la demande de copie d'un contenu demande qu'un contenu au niveau du serveur de conservation en mémoire de messages soit transféré vers le serveur de conservation en mémoire de contenus, la demande de copie d'un contenu étant une demande de protocole de transfert hypertexte PUT qui comprend une indication d'un emplacement du contenu sur le serveur de conservation en mémoire de messages,
le serveur de partage de contenus est configuré de façon à émettre une demande d'accès à un contenu (54; 64; 73, 74; 84, 86) vers le serveur de conservation en mémoire de messages, et
le serveur de conservation en mémoire de messages est configuré de façon à transférer le contenu vers ledit serveur de partage de contenus en réponse à la demande d'accès à un contenu.

23. Un programme informatique destiné à un serveur de partage de contenus, le programme informatique comprenant :
du code destiné à la réception à partir d'un dispositif d'utilisateur d'une demande de copie d'un contenu (52; 62; 72; 82), **caractérisé en ce que** la demande de copie d'un contenu demande qu'un contenu au niveau d'un serveur de conservation en mémoire de messages (34) soit fourni au serveur de partage de contenus, lorsqu'il est exécuté par le serveur de partage de contenus, la demande de copie d'un contenu étant une demande de protocole de transfert hypertexte PUT qui comprend une indication d'un emplacement du contenu sur le serveur,
et **caractérisé en ce que** le programme informatique comprend du code destiné à l'émission, lorsqu'il est exécuté par le serveur de partage de contenus, d'une demande d'accès à un contenu (54; 64; 73, 74; 84, 86) vers ledit serveur de conservation en mémoire de messages, et du code destiné à la réception, lorsqu'il est exécuté par le serveur de partage de contenus, dudit contenu à partir du serveur de conservation en mémoire de messages en réponse à la demande d'accès à un contenu.
